# EUROPEAN PATENT SPECIFICATION

(11) **EP 4 498 034 B1**
(45) Date of publication and mention of the grant of the patent: **07.10.2026**
(21) Application number: 23775280.3
(22) Date of filing: 21.03.2023
(51) Int. Cl.: G01B 11/14, G01B 11/02, G01B 11/06, H01M 50/105, H01M 50/186, H01M 50/131, H01M 10/04

(54) **FACILITY AND METHOD FOR MEASURING SEALING GAP FOR SECONDARY BATTERY**
VORRICHTUNG UND VERFAHREN ZUR MESSUNG DES DICHTUNGSABSTANDS EINER SEKUNDÄRBATTERIE
ÉQUIPEMENT DE MESURE ET PROCÉDÉ DE MESURE D'ESPACE D'ÉTANCHÉITÉ DE BATTERIE SECONDAIRE

(30) Priority: 21.03.2022 KR 20220035013
(43) Date of publication of application: 29.01.2025
(73) Proprietor: LG Energy Solution, Ltd., Seoul 07335 (KR)
(72) Inventor: OH, Young Joo, Daejeon 34122 (KR); LEE, Kyu Sang, Daejeon 34122 (KR); LEE, Jum Yeal, Daejeon 34122 (KR); KIM, Gyu Hyung, Daejeon 34122 (KR)
(74) Representative: Goddar, Heinz J.
(86) International application number: PCT/KR2023/003749
(87) International publication number: WO 2023/182784

(56) References cited:
- JP-A- 2011 033 459
- JP-A- 2011 033 459
- KR-A- 20210 065 988
- KR-A- 20210 150 106
- KR-B1- 102 039 526
- KR-B1- 102 091 768
- KR-B1- 102 091 768
- KR-B1- 102 122 292

## Description

### TECHNICAL FIELD

### CROSS-REFERENCE TO RELATED APPLICATION

The present application claims the benefit of the priority of Korean Patent Application Nos. 10-2022-0035013, filed on March 21, 2022, and 10-2023-0036787, filed on March 21, 2023.

### TECHNICAL FIELD

The present invention relates to a facility and method for measuring a sealing gap for a secondary battery, in which a sealing gap disposed between an electrode assembly accommodation part and a sealing part of a pouch is capable of being accurately measured.

### BACKGROUND ART

In general, secondary batteries refer to chargeable and dischargeable, unlike primary batteries that are not chargeable. The secondary batteries are being widely used for mobile phones, notebook computers, and camcorders, electric vehicles, and the like.

The secondary batteries are classified into a can type secondary battery, in which an electrode assembly is embedded in a metal can, a pouch type secondary battery in which an electrode assembly is embedded in a pouch, and a button type secondary battery having a coin shape.

Also, a pouch type secondary battery includes an electrode assembly and a pouch accommodating the electrode assembly. That is, the electrode assembly has a structure in which a positive electrode and a negative electrode are alternately disposed with a separator therebetween. The pouch includes an accommodation part accommodating the electrode assembly and a sealing part sealing the accommodation part while being formed on an edge of the accommodation part.

In the secondary battery, three of four edges formed on the pouch are sealed first in an assembly process to form a sealing part, and a remaining one edge formed on the pouch is sealed in a degassing process to form a sealing part.

Here, the sealing part formed on the pouch has to be formed in consideration of a full width of the electrode assembly, insulation failure, and sealing failure. The full width of the electrode assembly may include a sealing gap disposed between the accommodation part and the sealing part.

The sealing gap requires a certain width to ensure safety. That is, the sealing gap has a width set according to a thickness of the accommodation part. In particular, the sealing gap may have different values in the assembly process and the degassing process. That is, in the assembling process, the electrode assembly, an electrolyte, and a gas may be filled in the accommodation part, and in the degassing process, the gas inside the accommodation part may be discharged to cause a difference in sealing gap.

Here, the difference in sealing gap in the assembly process and the degassing process may cause defects in a process of folding the sealing part, and thus, it is necessary to accurately measure the sealing gap in the degassing process.

In the related art, the sealing gap disposed between the accommodation part and the sealing part of the pouch was measured using a steel ruler. However, the steel ruler has a problem in that a measured value varies depending on the number of measurements or each operator, and thus, it is difficult to accurately measure the sealing gap. The document KR 102 091 768 B1 discloses a facility for measuring a sealing gap for a secondary battery according to the state of the art.

### DISCLOSURE OF THE INVENTION

### TECHNICAL PROBLEM

An object of the present invention is to provide a facility and method for measuring a sealing gap for a secondary battery, in which a sealing gap disposed between an electrode assembly accommodation part and a sealing part of a pouch is capable of being accurately measured.

### TECHNICAL SOLUTION

The present invention provides a facility for measuring a sealing gap for a secondary battery, which measures a sealing gap disposed between an electrode assembly accommodation part and a sealing part of a pouch, and the facility includes: a first measurement device configured to acquire an inner start point and an outer end point of the sealing part; an origin point structure having a vertical reference surface corresponding to a point moved by a predetermined first distance (X1) in a direction of the electrode assembly accommodation part from a first reference origin point (O1) disposed between the inner start point and the outer end point; a second measurement device configured to acquire a second distance (X2) from the vertical reference surface to the electrode assembly accommodation part; and a controller configured to acquire the sealing gap based on the first distance (X1), the second distance (X2), and a third distance (X3) from the inner start point to the first reference origin point (O1).

The controller is configured to set the first reference origin point between the inner start point and the outer end point and acquire the third distance (X3) from the inner start point to the first reference origin point (O1).

The first measurement device may include: a first displacement sensor configured to irradiate beam to one surface of the pouch so as to measure the inner start point and the outer end point of the sealing part; and a second displacement sensor configured to irradiate beam to the other surface of the pouch so as to measure the inner start point and the outer end point of the sealing part.

If the inner start point and the outer end point of the sealing part, which are measured by the first displacement sensor and the second displacement sensor do not match, the controller may be configured to set points at which the inner start point and the outer end point, which are respectively measured by the first displacement sensor and the second displacement sensor, overlap each other, as the inner start point and the outer end point of the sealing part.

A thickness of a sealing width may be acquired based on a distance between a sealing width measured by the first displacement sensor and a sealing width measured by the second displacement sensor.

The second measurement device may be configured to irradiate beam toward the vertical reference surface so as to set a point at which the vertical reference surface is disposed as a second reference origin point (O2) and irradiate beam to the electrode assembly accommodation part so that the beam passes through the second reference origin point (O2) so as to acquire the second distance (X2) from the second reference origin point (O2) to the electrode assembly accommodation part.

The second measurement device may include a third displacement sensor configured to irradiate beam toward the vertical reference surface so as to set a point at which the vertical reference surface is disposed as the second reference origin point (O2).

The controller may be configured to acquire a value obtained by subtracting the third distance (X3) from the sum of the first distance (X1) and the second distance (X2) as the sealing gap.

The second reference origin point (O2) may be set so as not to be disposed within the sealing width.

The origin point structure may further include a horizontal reference surface extending from the vertical reference surface in the direction of the sealing width and having a through-hole through which the beam irradiated from the first displacement sensor passes.

The controller may be configured to determine that the sealing gap measured by the second measurement device is defective when the sealing gap is less or greater than a previously input sealing gap.

A method for measuring a sealing gap for a secondary battery, in which a sealing gap disposed between an electrode assembly accommodation part and a sealing part of a pouch is measured according to the present invention includes: a first measurement process of acquiring an inner start point and an outer end point of the sealing part; an origin point setting process of setting a vertical reference surface corresponding to a point moved by a predetermined first distance (X1) in a direction of the electrode assembly accommodation part from a first reference origin point disposed between the inner start point and the outer end point; a second measurement process of acquiring a second distance (X2) from the vertical reference surface to the electrode assembly accommodation part; and a sealing gap measurement process of acquiring the sealing gap based on the first distance (X1), the second distance (X2), and a third distance (X3) from the inner start point to the first reference origin point (O1).

In the first measurement process, the first reference origin point between the inner start point and the outer end point is set, and the third distance (X3) from the inner start point to the first reference origin point (01) is acquired.

The first measurement process may further include: a first process of irradiating beam to one surface of the pouch to measure the inner start point and the outer end point of the sealing part; a second process of irradiating beam to the other surface of the pouch to measure the inner start point and the outer end point of the sealing part; and a third process of setting points at which the inner start point and the outer end point of the sealing part overlap each other as the inner start point and the outer end point of the sealing part if the inner start point and the outer end point of the sealing part, which are measured in the first process and the second process, do not match.

The first measurement process may further include a process of acquiring a thickness of a sealing width based on a distance between a sealing width measured in the first process and a sealing width measured in the second process.

In the second measurement process, beam may be irradiated toward the vertical reference surface to set a point at which the vertical reference surface is disposed as a second reference origin point (O2), and beam may be irradiated to the electrode assembly accommodation part so that the beam passes through the second reference origin point (O2) to acquire the second distance (X2) from the second reference origin point (O2) to the electrode assembly accommodation part.

In the second measurement process, the second reference origin point (O2) may be set so as not to be disposed between the inner start point and the outer end point of the sealing part.

In the sealing gap measurement process, a value obtained by subtracting the third distance (X3) from the sum of the first distance (X1) and the second distance (X2) may be acquired as the sealing gap.

The method may further include an inspection process of determining whether the measured sealing gap is defective after the sealing gap measurement process is completed, wherein, in the inspection process, when the measured sealing gap is smaller or larger than the previously input sealing gap, it may be determined that the sealing gap is defective.

### ADVANTAGEOUS EFFECTS

The facility for measuring the sealing gap for the secondary battery according to the present invention may include the first measurement device and the second measurement device to accurately measure the sealing gap disposed between the electrode assembly accommodation part and the sealing part of the pouch, thereby accurately determining whether the sealing gap is defective.

### BRIEF DESCRIPTION OF THE DRAWINGS

FIG. 1 is a cross-sectional view of a secondary battery to the present invention.
FIG. 2 is a perspective view illustrating a facility for measuring a sealing gap for a secondary battery according to a first embodiment of the present invention.
FIG. 3 is a partial enlarged view of FIG. 2.
FIG. 4 is a front view of FIG. 2.
FIG. 5 is a view for explaining a sealing gap measurement state using the facility for measuring the sealing gap for the secondary battery according to the first embodiment of the present invention.
FIG. 6 is a perspective view illustrating an origin point structure of the facility for measuring the sealing gap for the secondary battery according to the first embodiment of the present invention.
FIG. 7 is a view for explaining a state of measuring a sealing width of the facility for measuring the sealing gap for the secondary battery according to the first embodiment of the present invention.
FIG. 8 is a flowchart illustrating a method for measuring a sealing gap for a secondary battery according to the first embodiment of the present invention.
FIG. 9 is a schematic view of a first measurement process.
FIG. 10 is a schematic view of an origin setting process and a second measurement process.
FIG. 11 is a schematic view of a sealing gap measurement process.
FIG. 12 is a plan view illustrating a facility for measuring a sealing gap for a secondary battery according to a second embodiment of the present invention.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Secondary battery according to the present invention]

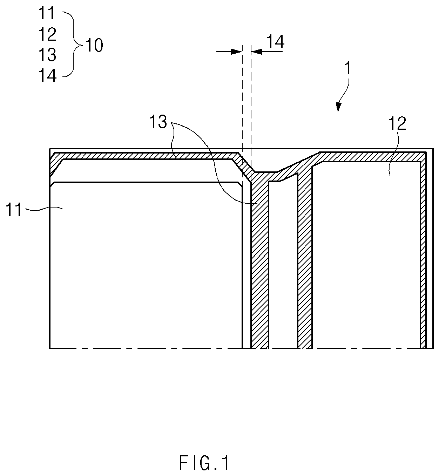

FIG. 1 is a perspective view of a secondary battery to the present invention.

Referring to FIG. 1, a secondary battery 1 of the present invention includes an electrode assembly, an electrolyte (not shown), and a pouch 10 accommodating the electrode assembly and the electrolyte.

The electrode assembly has a structure in which a plurality of electrodes and a plurality of separators are alternately disposed. The plurality of electrodes may be positive and negative electrodes. Here, electrode tabs are provided on the plurality of electrodes, and electrode leads are coupled to the electrode tabs.

The pouch 10 includes an electrode assembly accommodation part 11 accommodating an electrode assembly, a gas pocket part 12 collecting a gas generated in the electrode assembly accommodation part 11, and a sealing part 13 sealing the electrode assembly accommodation part 11 and the gas pocket part 12, and the sealing part 13 includes a sealing surface sealing an edge of the electrode assembly accommodation part 11 and the gas pocket part 12, and a re-sealing surface sealing a gap between the electrode assembly accommodation part and the gas pocket part.

A sealing gap 14 is provided in a full-width direction of the pouch 10 (left and right direction of the pouch as viewed in FIG. 1) to prevent defects from occurring when sealing the pouch, and the sealing gap 14 is disposed between the electrode assembly accommodation part 11 and the sealing part 13. That is, the sealing gap 14 may be an extra space that is not sealed.

The sealing gap 14 requires a certain width to ensure safety, and thus, it is necessary to measure whether the sealing gap secured in the pouch is accurately secured. Here, a facility for measuring the sealing gap for the secondary battery according to a first embodiment of the present invention may be used.

Hereinafter, the facility for measuring the sealing gap for the secondary battery according to the first embodiment of the present invention will be described in detail with reference to the accompanying drawings.

### [Facility for measuring sealing gap for secondary battery according to first embodiment of the present invention]

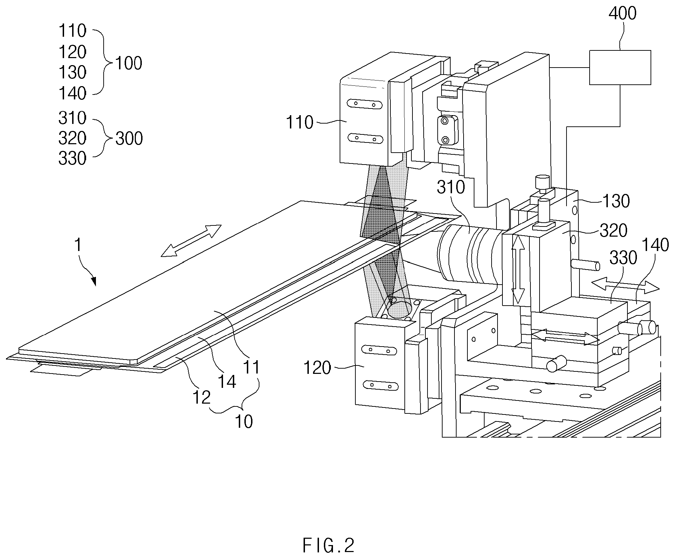

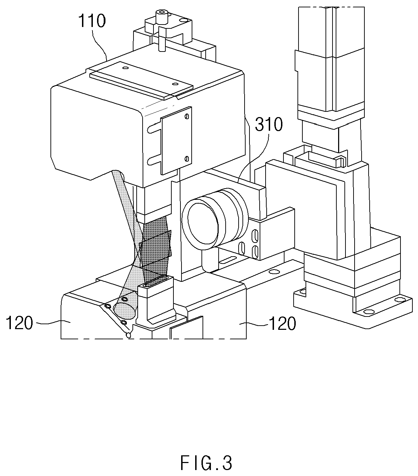

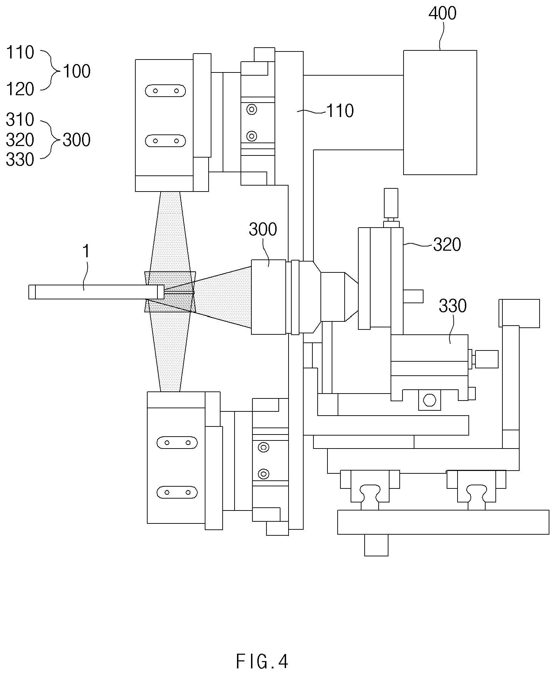

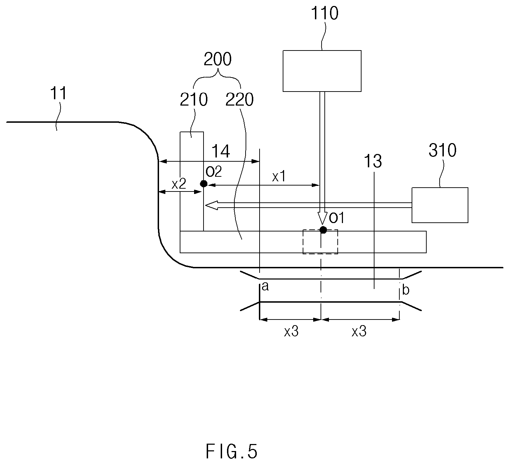

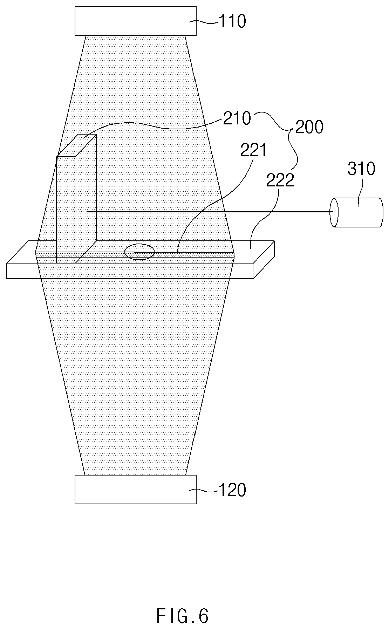

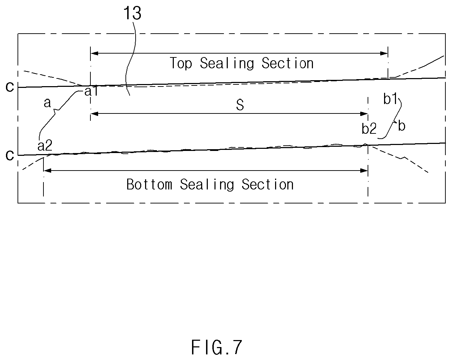

FIG. 2 is a perspective view illustrating the facility for measuring the sealing gap for the secondary battery according to a first embodiment of the present invention, FIG. 3 is a partial enlarged view of FIG. 2, FIG. 4 is a front view of FIG. 2, FIG. 5 is a view for explaining a sealing gap measurement state using the facility for measuring the sealing gap for the secondary battery according to the first embodiment of the present invention, FIG. 6 is a perspective view illustrating an origin point structure of the facility for measuring the sealing gap for the secondary battery according to the first embodiment of the present invention, and FIG. 7 is a view for explaining a state of measuring a sealing width of the facility for measuring the sealing gap for the secondary battery according to the first embodiment of the present invention.

the facility for measuring the sealing gap for the secondary battery according to the first embodiment of the present invention is configured to measure the sealing gap disposed between the electrode assembly accommodation part and the sealing part of the pouch.

That is, as illustrated in FIGS. 1 to 4, the facility for measuring the sealing gap for the secondary battery according to the first embodiment of the present invention may include a first measurement device 100, an origin point structure 200, a second measurement device 300, and a controller 400.

### First measurement device

The first measurement device 100 is configured to acquire an inner start point and an outer end point of the sealing part.

That is, the first measurement device 100 acquires a sealing width S through the inner start point a and the outer end point b of the sealing part 13 provided in the pouch. In addition, a first reference origin point O1 is set within the sealing width S.

The sealing of the pouch is performed from the electrode assembly accommodation part toward the gas pocket part. A point at which the sealing starts is referred to as the inner start point a, and a point at which the sealing is ended is referred to as the outer end point b.

For example, the first measurement device 100 include a first displacement sensor 110 and a second displacement sensor 120, the first displacement sensor 110 and the second displacement sensor 120 are provided to correspond to both sides (upper and lower portions of the pouch when viewed in FIG. 1) with respect to the pouch 10, and beam is irradiated onto a surface of the pouch to measure each of the inner start point a and the outer end point b of the sealing part 13. Thus, the first displacement sensor 110 and the second displacement sensor 120 acquire the sealing width S through a distance between the inner start point a and the outer end point b.

Referring to FIG. 7, the first displacement sensor 110 and the second displacement sensor 120 generate a virtual horizontal line c to match sealing surfaces that are respectively formed on both surfaces of the pouch 10, and a point deviating from the virtual horizontal line c with respect to the virtual horizontal line c is regarded as an area except for the sealing area to designate the inner start point a and the outer end point b. In addition, the sealing width S may be calculated by measuring a distance between the inner start point a and the outer end point b.

Each of the first displacement sensor 110 and the second displacement sensor 120 may be a line laser sensor. The line laser sensor refers to a device such as a scanner or facsimile that reads information such as characters and figures existing on a surface of a paper or object.

The first measurement device 100 may further include a first vertical moving member 130. That is, the first vertical moving member 130 moves the first and second displacement sensors 110 and 120 toward both the surfaces of the pouch (top and bottom surfaces of the pouch when viewed in FIG. 2) or move the first and second displacement sensors 110 and 120 to be away from both the surfaces of the pouch. Thus, the first vertical moving member 130 may simultaneously move the first and second displacement sensors 120 in a direction toward the pouch or in an opposite direction thereof, and as a result, the distance may be adjusted so that the beam of the first and second displacement sensors 110 and 120 is accurately irradiated to the surface of the pouch.

In addition, the first measurement device 100 may further include a first full-width moving member 140. That is, the first full width moving member 140 moves the first and second displacement sensors 110 and 120 in the full-width direction of the pouch (a left and right direction of the pouch when viewed in FIG. 2) to locate the first and second displacement sensors 110 and 120 on the sealing part of the pouch. Thus, the first and second displacement sensors 110 and 120 may be accurately disposed on the sealing part of the pouch, and as a result, the sealing width of the sealing part may be accurately measured.

### Origin point structure

The origin point structure 200 provides a vertical reference surface corresponding to a point that is moved by a predetermined first distance X1 from a first reference origin point O1 disposed between the inner start point and the outer end point in the direction of the electrode assembly accommodation part.

That is, the origin point structure 200 is configured to set a second reference origin point O2 for measuring the sealing gap, and a vertical reference surface 210 disposed at a point moved by the first distance X1 from the first reference origin point O1 in the direction of the electrode assembly accommodating part is provided. In addition, the origin point structure 200 moves the vertical reference surface 210 horizontally from the first reference origin point O1 toward the electrode assembly accommodation part by the first distance X1 and then set the point as the second reference origin point O2.

Here, the vertical reference surface 210 sets the second reference origin point O2 at a point that is not disposed within the sealing width S. This is done for preventing a measurement error from occurring due to the vertical reference surface when measuring the sealing width through the first and second displacement sensors 110 and 120.

Particularly, the origin point structure 200 may further include a horizontal reference surface 220 for locating the first and second displacement sensors 110 and 120 and the third displacement sensor 310 on the same vertical surface.

That is, the horizontal reference surface 220 extends long from a lower end of the vertical reference surface 210 in the direction of the sealing width, and a through-hole 221 through which the beam irradiated from the first displacement sensor 110 passes is defined. Thus, in the origin point structure 200, the beam of the third displacement sensor 310 is irradiated to the vertical reference surface 210, and the beam of the first displacement sensor 110 is irradiated to the through-hole of the horizontal reference surface 220. Thus, the first and second displacement sensors 110 and 120 and the third displacement sensor 310 may be adjusted to be disposed on the same line, and as a result, an occurrence of errors in measuring the sealing width may be minimized.

### Second measurement device

The second measurement device 300 is configured to acquire a second distance X2 from the vertical reference surface to the electrode assembly accommodation part.

That is, referring to FIG. 5, the second measurement device 300 includes a third displacement sensor 310. The third displacement sensor 310 irradiates beam toward the vertical reference surface 210 to set a point, at which the vertical reference surface 210 is disposed, as the second reference origin O2, and beam is irradiated to the electrode assembly accommodating part 11 to pass through the second reference origin point O2, thereby acquiring the second distance X2 from the second reference origin O2 to the electrode assembly accommodating part 11.

The second measurement device 300 may further include a second vertical moving member 320. The second vertical moving member 320 allows the third displacement sensor 310 to ascend or descend so that the third displacement sensor 310 irradiates beam toward the vertical reference surface 210 of the origin point structure 200. Thus, a position of the third displacement sensor 310 may be accurately adjusted so that the beam of the third displacement sensor 310 is irradiated to the vertical reference surface 210 of the origin point structure 200.

In addition, the second measurement device 300 may further include a second full-width moving member 250. The second full-width moving member 250 may move the third displacement sensor 310 forward or backward toward the pouch in order to adjust a distance between the third displacement sensors 310 based on the vertical reference surface 210. Thus, the distance between the vertical reference surface 210 and the third displacement sensor may be adjusted.

### Controller

The controller 400 is configured to acquire the sealing gap based on the first distance X1, the second distance X2, and the third distance X3 from the inner start point to the first reference origin point O1.

That is, the controller 400 sets the first reference origin point O1 between the inner start point a and the outer end point b and acquires the third distance X3 from the inner start point a to the first reference origin point O1. The sealing gap may be acquired based on the first distance X1, the second distance X2, and the third distance X3.

For example, the controller 400 may acquire a value acquired by subtracting the third distance X3 from the sum of the first distance X1 and the second distance X2 as the sealing gap 14.

The controller 400 may set the first reference origin point O1 at a central point of the sealing width S. In this case, the distance between the inner start point and the first reference origin point and the distance between the outer end point and the first reference origin point are symmetrical to each other to improve efficiency of calculation.

When the inner start point a and outer end point b of the sealing part 13 measured by the first displacement sensor 110 and the second displacement sensor 120 do not match each other, the controller 400 sets overlapping points between the inner start point a and the outer end point b of the sealing part 13, which are respectively measured by the first displacement sensor 110 and the second displacement sensor 120, as the inner start point a and the outer end point b of the sealing part 13.

That is, when an inner start point a1 and an outer end point b2, which are measured by the first displacement sensor 110 match with an inner start point a2 and an outer end point b2, which are measured by the second displacement sensor 120, the controller 400 set overlapping points between the inner start point and the outer end point of the sealing part, which are measured by the first displacement sensor 110 and the second displacement sensor 120 as the inner start point and the outer end point of the sealing part.

In other words, referring to FIG. 5, the controller 400 sets the inner start point a1 of the overlapping top sealing surface of the inner start point a1 of the upper sealing surface and the inner starting point a2 of the lower sealing surface as the inner starting point of the sealing unit and sets the outer end point b2 of the overlapping lower sealing surface of the outer end point b1 of the upper sealing surface and the outer end point b2 of the lower sealing surface as the outer end point of the sealing part. Thus, accuracy in measurement with respect to the sealing width S may be improved.

The controller 400 acquires a thickness of the sealing width based on the distance between the sealing width measured by the first displacement sensor 110 and the sealing width measured by the second displacement sensor 120. Thus, the thickness of the sealing width may be accurately measured without an additional facility.

The controller 400 may determine that the sealing gap 14 measured by the second measurement device 300 is less or greater than the previously input sealing gap as defective. Thus, defects in the sealing gap disposed in the pouch may be accurately measured and inspected. The input sealing gap may be set according to a size of the pouch and a capacity of the electrode assembly.

Therefore, the facility for measuring the sealing gap for the secondary battery according to the first embodiment of the present invention may include a first measurement device 100, an origin point structure 200, a second measurement device 300, and a controller 400 to accurately measure the sealing gap provided in the pouch.

Hereinafter, a method for measuring a sealing gap for a secondary battery according to the first embodiment of the present invention will be described.

### [Method for measuring sealing gap for secondary battery according to first embodiment of the present invention]

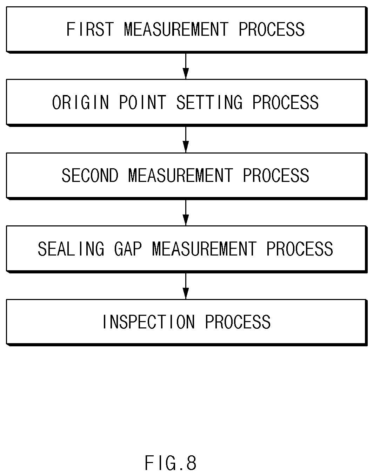

FIG. 8 is a flowchart illustrating a method for measuring a sealing gap for a secondary battery according to the first embodiment of the present invention.

As illustrated in FIG. 8, the method for measuring the sealing gap for the secondary battery according to the first embodiment of the present invention is configured to measure a sealing gap disposed between an electrode assembly accommodation part and a sealing part of a pouch.

That is, the method for measuring the sealing gap for the secondary battery according to the first embodiment of the present invention includes a first measurement process, an origin point setting process, a second measurement process, and a sealing gap measurement process.

### First measurement process

In the first measurement process, a first measurement device 100 is used, and the first measurement device 100 includes a first displacement sensor 110 and a second displacement sensor 120.

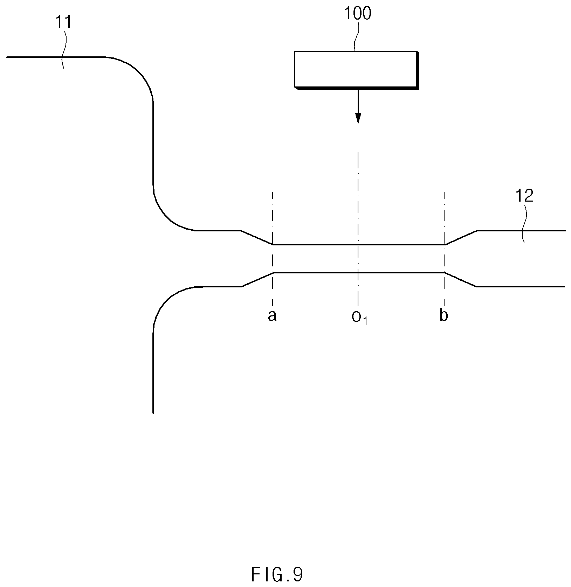

That is, in the first measurement process, as illustrated in FIG. 9, a sealing width S is acquired through an inner start point a and an outer end point b of a sealing part 13 provided in the pouch. Next, a first reference origin point O1 is set within the sealing width.

In other words, the first measurement step includes a first process of measuring an inner start point and an outer end point of the sealing part by irradiating beam on one surface of the pouch, and a second process of measuring an inner start point and an outer end point of the sealing part by irradiating beam on the other surface of the pouch.

In more detail, referring to FIG. 7, in the first measurement process, the inner start point and the outer end point of the sealing part formed on both sides of the pouch are measured through the first displacement sensor 110 and the second displacement sensor 120, which are provided on both surfaces of the pouch, respectively. For example, the first displacement sensor 110 measures the inner start point a1 and the outer end point b1 of the upper sealing surface formed on the top surface of the pouch, and the second displacement sensor 120 measures the inner start point a2 and the outer end point b2 of the lower sealing surface formed on the bottom surface of the pouch. In addition, the sealing width S is acquired by measuring the distance between the inner start point and the outer end point of the sealing surface measured by the first and second displacement sensors 110 and 120. Next, a first reference origin point O1 is set within the sealing width S.

Here, the first reference origin point may be set at a center point of the sealing width.

In the first measurement process, if the inner start points and the outer end points of the sealing part provided on both the surfaces of the pouch do not match, the points at which the inner start point and the outer end point of the sealing part provided on both the surfaces of the pouch overlap each other are set as the inner start point and outer end point of the sealing part, respectively.

That is, if the inner start points and the outer end points of the sealing part measured in the first process and the second process do not match, the first measurement process further includes a third process of setting the points at which the inner start point and the outer end point of the sealing part overlap each other as the inner start point and the outer end point of the sealing part, respectively.

For example, in the first measurement process, referring to FIG. 7, the inner start point a1 of the upper sealing surface of the inner start point a1 of the upper sealing surface and the inner start point a2 of the lower sealing surface is set, and the outer end point b2 of the lower sealing surface of the outer end point b1 of the upper sealing surface and the outer end point b2 of the lower sealing surface is set.

The first measurement process further includes a process of acquiring a thickness of the sealing width based on the distance between the sealing width measured in the first process and the sealing width measured in the second process. That is, the thickness of the sealing width may be acquired based on the distance between the sealing width measured by the first displacement sensor 110 and the sealing width measured by the second displacement sensor 120.

In the first measurement process, after setting the first reference origin point O1 between the inner start point a and the outer end point b, a third distance X3 between the inner start point a and the first reference origin point O1 is acquired.

### Origin point setting process

The origin point setting process uses an origin point structure 200, and the origin point structure 200 includes a vertical reference surface 210 and a horizontal reference surface 220.

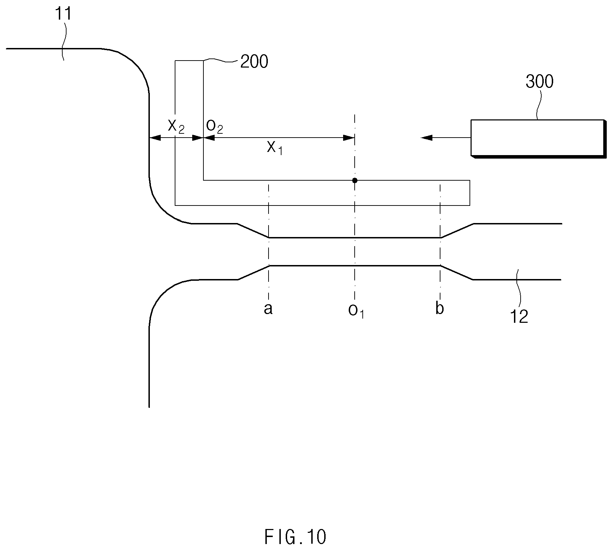

That is, in the origin point setting process, as illustrated in FIG. 10, the vertical reference surface 210 corresponding to a point moved by a predetermined first distance X1 in a direction of the electrode assembly accommodation part from the first reference origin point O1 disposed between the inner start point a and the outer end point b is set.

In the origin point setting process, beam irradiated from the first displacement sensor 110 passes through a through-hole 221 formed in the horizontal reference surface 220 of the origin point structure 200, and thus, the first and second displacement sensors 110 and 120 and the third displacement sensor 310 to be described later may be disposed on the same vertical surface. Here, the horizontal reference surface 220 extends in the sealing width direction from the lower end of the vertical reference surface 210. Thus, in the origin point structure 200, the beam of the third displacement sensor 310 is irradiated to the vertical reference surface 210, and the beam of the first displacement sensor 110 is irradiated to the through-hole of the horizontal reference surface 220. Thus, the first and second displacement sensors 120 and the third displacement sensor 310 may be adjusted to be disposed on the same line, and as a result, an occurrence of errors in measuring the sealing width may be minimized.

### Second measurement process

The second measurement process uses a second measurement device 300, and the second measurement device 300 includes a third displacement sensor 310.

That is, in the second measurement process, beam is irradiated toward the vertical reference surface 210 to set a point at which the vertical reference surface 210 is disposed as the second reference origin point O2, and then, beam is irradiated to the electrode assembly accommodating part to pass through the second reference origin point O2, thereby acquiring the second distance X2 from the second reference origin O2 to the electrode assembly accommodating part 11.

In the second measurement process, the second reference origin point O2 is set so as not to be disposed between the inner start point and outer end point of the sealing part.

### Sealing gap measurement process

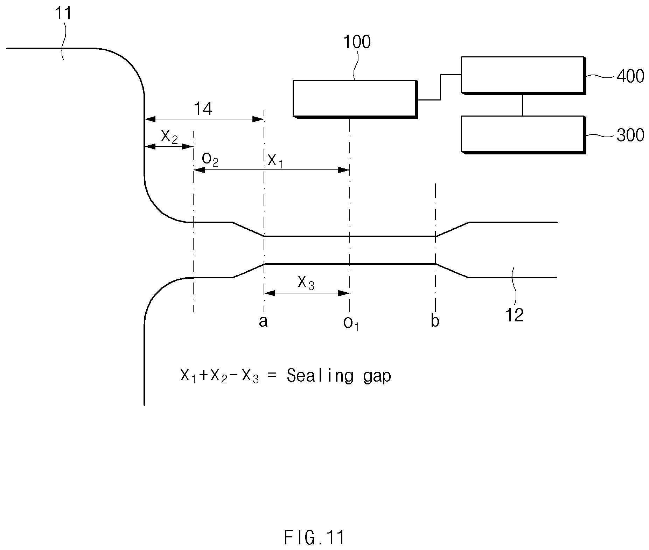

As illustrated in FIG. 11, in the sealing gap measurement process, the sealing gap is acquired based on the first distance X1, the second distance X2, and the third distance X3 from the inner start point to the first reference origin point O1.

That is, in the sealing gap measurement process, a value acquired by subtracting the third distance X3 from the sum of the first distance X1 and the second distance X2 may be acquired as the sealing gap.

The sealing gap measurement process may further include an inspection process of determining whether the measured sealing gap is defective.

That is, in the inspection process, if the measured sealing gap is less or greater than a previously input sealing gap, it is determined as a defect.

Therefore, in the method for measuring the sealing gap for the secondary battery according to the first embodiment of the present invention, the sealing gap may be accurately measured, and whether the sealing gap is defective may be accurately inspected.

Hereinafter, in descriptions of another embodiment of the present invention, constituents having the same function as the above-mentioned embodiment have been given the same reference numeral in the drawings, and thus duplicated description will be omitted.

### [Facility for measuring sealing gap for secondary battery according to second embodiment of the present invention]

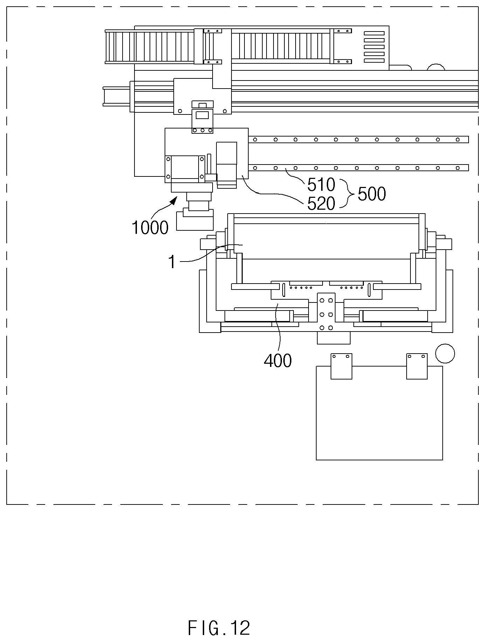

As illustrated in FIG. 12, a facility 1000 for measuring a sealing gap for a secondary battery according to a second embodiment of the present invention may include a first measurement device, an origin point structure, a second measurement device, and a controller.

The first measurement device, the origin point structure, the second measurement device, and the controller have the same configurations as the first measurement device, the origin point structure, the second measurement device, and the controller of the facility for measuring the sealing gap for the secondary battery according to the first embodiment, and thus, redundant descriptions thereof are omitted.

Here, the facility 1000 for measuring the sealing gap for the secondary battery according to the second embodiment of the present invention includes a jig device 410 on which a pouch is disposed and a guide device 500 that slidably moves the first and second measurement devices 100 and 300 in a full-length direction of a pouch.

The jig device 410 fixes the pouch without movement while disposing the pouch thereon.

The guide device 500 moves the jig device 410 in the full-length direction of the pouch to inspect whether the sealing gap formed in the pouch is defective on the whole. On the other hand, the guide device 500 includes a guide rail 510 formed in the full-length direction of the pouch, and a guide member 520 movably coupled to the guide rail 510 to move the jig device along the guide rail.

Therefore, the facility for measuring the sealing gap for the secondary battery according to the second embodiment of the present invention may measure the entire sealing gap formed in the full-length direction of the pouch to inspect whether the sealing gap is defective on the whole.

Accordingly, the scope of the present invention is defined by the appended claims more than the foregoing description and the exemplary embodiments described therein. Various modifications made within the meaning of the claims of the invention and within the claims are to be regarded to be in the scope of the present invention.

### [Description of the Symbols]

O1: First reference origin point
O2: Second reference origin point
S: Sealing width
1: Secondary battery
10: Pouch
11: Electrode assembly accommodation part
12: Gas pocket part
13: Sealing part
14: Sealing gap
100: First measurement device
110: First displacement sensor
120: Second displacement sensor
140: First vertical moving member
150: First full-width moving member
200: Origin point structure
210: Vertical reference surface
220: Horizontal reference surface
221: Through-hole
300: Second measurement device
310: Third displacement sensor
330: Second vertical moving member
340: Second full-width moving member
400: Controller
410: Jig device
500: Guide device
510: Guide rail
520: Guide member

## Claims

1. A facility for measuring a sealing gap (14) for a secondary battery (1), which measures a sealing gap (14) disposed between an electrode assembly accommodation part (11) and a sealing part (13) of a pouch (10), the facility comprising:
a first measurement device (100) configured to acquire an inner start point and an outer end point of the sealing part (13),
**characterised in that** it further comprises:
an origin point structure (200) having a vertical reference surface (210) corresponding to a point moved by a predetermined first distance (X1) in a direction of the electrode assembly accommodation part (11) from a first reference origin point (O1) disposed between the inner start point and the outer end point;
a second measurement device (300) configured to acquire a second distance (X2) from the vertical reference surface (210) to the electrode assembly accommodation part (11); and
a controller (400) configured to acquire the sealing gap (14) based on the first distance (X1), the second distance (X2), and a third distance (X3) from the inner start point to the first reference origin point (O1),
wherein the controller (400) is configured to set the first reference origin point (O1) between the inner start point and the outer end point and acquire the third distance (X3) from the inner start point to the first reference origin point (O1).

2. The facility of claim 1, wherein the first measurement device (100) comprises:
a first displacement sensor (110) configured to irradiate beam to one surface of the pouch (10) so as to measure the inner start point and the outer end point of the sealing part (13); and
a second displacement sensor (120) configured to irradiate beam to the other surface of the pouch (10) so as to measure the inner start point and the outer end point of the sealing part (13).

3. The facility of claim 2, wherein, if the inner start point and the outer end point of the sealing part (13), which are measured by the first displacement sensor (110) and the second displacement sensor (120) do not match, the controller (400) is configured to set points at which the inner start point and the outer end point, which are respectively measured by the first displacement sensor (110) and the second displacement sensor (120), overlap each other, as the inner start point and the outer end point of the sealing part (13).

4. The facility of claim 2, wherein a thickness of a sealing width (S) is acquired based on a distance between a sealing width (S) measured by the first displacement sensor (110) and a sealing width (S) measured by the second displacement sensor (120).

5. The facility of claim 4, wherein the second measurement device (300) is configured to irradiate beam toward the vertical reference surface (210) so as to set a point at which the vertical reference surface (210) is disposed as a second reference origin point (O2) and irradiate beam to the electrode assembly accommodation part (11) so that the beam passes through the second reference origin point (O2) so as to acquire the second distance (X2) from the second reference origin point (O2) to the electrode assembly accommodation part (11).

6. The facility of claim 5, wherein the second measurement device (300) comprises a third displacement sensor (310) configured to irradiate beam toward the vertical reference surface (210) so as to set a point at which the vertical reference surface (210) is disposed as the second reference origin point (O2).

7. The facility of claim 1, wherein the controller (400) is configured to acquire a value obtained by subtracting the third distance (X3) from the sum of the first distance (X1) and the second distance (X2) as the sealing gap (14).

8. The facility of claim 4, wherein the origin point structure (200) further comprises a horizontal reference surface (220) extending from the vertical reference surface (210) in the direction of the sealing width (S) and having a through-hole (221) through which the beam irradiated from the first displacement sensor (110) passes.

9. A method for measuring a sealing gap (14) for a secondary battery (1), in which a sealing gap (14) disposed between an electrode assembly accommodation part (11) and a sealing part (13) of a pouch (10) is measured, the method comprising:
a first measurement process of acquiring an inner start point and an outer end point of the sealing part (13),
**characterised in that** it comprises:
an origin point setting process of setting a vertical reference surface (210) corresponding to a point moved by a predetermined first distance (X1) in a direction of the electrode assembly accommodation part (11) from a first reference origin point (O1) disposed between the inner start point and the outer end point;
a second measurement process of acquiring a second distance (X2) from the vertical reference surface (210) to the electrode assembly accommodation part (11); and
a sealing gap (14) measurement process of acquiring the sealing gap (14) based on the first distance (X1), the second distance (X2), and a third distance (X3) from the inner start point to the first reference origin point (O1),
wherein, in the first measurement process, the first reference origin point (O1) between the inner start point and the outer end point is set, and the third distance (X3) from the inner start point to the first reference origin point (O1) is acquired.

10. The method of claim 9, wherein the first measurement process further comprises:
a first process of irradiating beam to one surface of the pouch (10) to measure the inner start point and the outer end point of the sealing part (13);
a second process of irradiating beam to the other surface of the pouch (10) to measure the inner start point and the outer end point of the sealing part (13); and
a third process of setting points at which the inner start point and the outer end point of the sealing part (13) overlap each other as the inner start point and the outer end point of the sealing part (13) if the inner start point and the outer end point of the sealing part (13), which are measured in the first process and the second process, do not match.

11. The method of claim 10, wherein the first measurement process further comprises a process of acquiring a thickness of a sealing width (S) based on a distance between a sealing width (S) measured in the first process and a sealing width (S) measured in the second process.

12. The method of claim 9, wherein, in the second measurement process, beam is irradiated toward the vertical reference surface (210) to set a point at which the vertical reference surface (210) is disposed as a second reference origin point (O2), and beam is irradiated to the electrode assembly accommodation part (11) so that the beam passes through the second reference origin point (O2) to acquire the second distance (X2) from the second reference origin point (O2) to the electrode assembly accommodation part (11).

13. The method of claim 9, wherein, in the sealing gap (14) measurement process, a value obtained by subtracting the third distance (X3) from the sum of the first distance (X1) and the second distance (X2) is acquired as the sealing gap (14).

## Patentansprüche

1. Einrichtung zum Messen eines Dichtungsspalts (14) für eine Sekundärbatterie (1), die einen Dichtungsspalt (14) misst, der zwischen einem Elektrodenanordnungsaufnahmeteil (11) und einem Dichtungsteil (13) eines Pouch (10) angeordnet ist, wobei die Einrichtung Folgendes aufweist:
eine erste Messvorrichtung (100), die konfiguriert ist, einen inneren Startpunkt und einen äußeren Endpunkt des Dichtungsteils (13) zu erfassen,
**dadurch gekennzeichnet, dass** sie ferner Folgendes aufweist:
eine Ursprungspunktstruktur (200) mit einer vertikalen Referenzoberfläche (210), die einem Punkt entspricht, der um einen vorbestimmten ersten Abstand (X1) in einer Richtung des Elektrodenanordnungsaufnahmeteils (11) von einem ersten Referenzursprungspunkt (O1) bewegt wird, der zwischen dem inneren Startpunkt und dem äußeren Endpunkt angeordnet ist;
eine zweite Messvorrichtung (300), die konfiguriert ist, einen zweiten Abstand (X2) von der vertikalen Referenzoberfläche (210) zu dem Elektrodenanordnungsaufnahmeteil (11) zu erfassen; und
eine Steuerung (400), die konfiguriert ist, den Dichtungsspalt (14) basierend auf dem ersten Abstand (X1), dem zweiten Abstand (X2) und einem dritten Abstand (X3) von dem inneren Startpunkt zu dem ersten Referenzursprungspunkt (O1) zu erfassen,
wobei die Steuerung (400) konfiguriert ist, den ersten Referenzursprungspunkt (O1) zwischen dem inneren Startpunkt und dem äußeren Endpunkt einzustellen und den dritten Abstand (X3) von dem inneren Startpunkt zu dem ersten Referenzursprungspunkt (O1) zu erfassen.

2. Einrichtung nach Anspruch 1, wobei die erste Messvorrichtung (100) Folgendes aufweist:
einen ersten Verschiebungssensor (110), der konfiguriert ist, einen Strahl auf eine Oberfläche des Pouch (10) auszustrahlen, um den inneren Startpunkt und den äußeren Endpunkt des Dichtungsteils (13) zu messen; und
einen zweiten Verschiebungssensor (120), der konfiguriert ist, einen Strahl auf die andere Oberfläche des Pouch (10) auszustrahlen, um den inneren Startpunkt und den äußeren Endpunkt des Dichtungsteils (13) zu messen.

3. Einrichtung nach Anspruch 2, wobei, wenn der innere Startpunkt und der äußere Endpunkt des Dichtungsteils (13), die durch den ersten Verschiebungssensor (110) und den zweiten Verschiebungssensor (120) gemessen werden, nicht übereinstimmen, die Steuerung (400) konfiguriert ist, Punkte, an denen der innere Startpunkt und der äußere Endpunkt, die jeweils durch den ersten Verschiebungssensor (110) und den zweiten Verschiebungssensor (120) gemessen werden, einander überlappen, als den inneren Startpunkt und den äußeren Endpunkt des Dichtungsteils (13) einzustellen.

4. Einrichtung nach Anspruch 2, wobei eine Dicke einer Dichtungsbreite (S) basierend auf einem Abstand zwischen einer Dichtungsbreite (S), die durch den ersten Verschiebungssensor (110) gemessen wird, und einer Dichtungsbreite (S), die durch den zweiten Verschiebungssensor (120) gemessen wird, erfasst wird.

5. Einrichtung nach Anspruch 4, wobei die zweite Messvorrichtung (300) konfiguriert ist, einen Strahl auf die vertikale Referenzoberfläche (210) auszustrahlen, um einen Punkt, an dem die vertikale Referenzoberfläche (210) angeordnet ist, als einen zweiten Referenzursprungspunkt (O2) einzustellen und einen Strahl auf das Elektrodenanordnungsaufnahmeteil (11) auszustrahlen, so dass der Strahl durch den zweiten Referenzursprungspunkt (O2) verläuft, um den zweiten Abstand (X2) von dem zweiten Referenzursprungspunkt (O2) zu dem Elektrodenanordnungsaufnahmeteil (11) zu erfassen.

6. Einrichtung nach Anspruch 5, wobei die zweite Messvorrichtung (300) einen dritten Verschiebungssensor (310) aufweist, der konfiguriert ist, einen Strahl auf die vertikale Referenzoberfläche (210) auszustrahlen, um einen Punkt, an dem die vertikale Referenzoberfläche (210) angeordnet ist, als den zweiten Referenzursprungspunkt (O2) einzustellen.

7. Einrichtung nach Anspruch 1, wobei die Steuerung (400) konfiguriert ist, einen Wert, der durch Subtrahieren des dritten Abstands (X3) von der Summe des ersten Abstands (X1) und des zweiten Abstands (X2) erhalten wird, als den Dichtungsspalt (14) zu erfassen.

8. Einrichtung nach Anspruch 4, wobei die Ursprungspunktstruktur (200) ferner eine horizontale Referenzoberfläche (220) aufweist, die sich von der vertikalen Referenzoberfläche (210) in der Richtung der Dichtungsbreite (S) erstreckt und ein Durchgangsloch (221) aufweist, durch das der Strahl, der von dem ersten Verschiebungssensor (110) ausgestrahlt wird, verläuft.

9. Verfahren zum Messen eines Dichtungsspalts (14) für eine Sekundärbatterie (1), bei dem ein Dichtungsspalt (14), der zwischen einem Elektrodenanordnungsaufnahmeteil (11) und einem Dichtungsteil (13) eines Pouch (10) angeordnet ist, gemessen wird, wobei das Verfahren Folgendes aufweist:
einen ersten Messprozess zum Erfassen eines inneren Startpunkts und eines äußeren Endpunkts des Dichtungsteils (13),
**dadurch gekennzeichnet, dass** es Folgendes aufweist:
einen Ursprungspunkteinstellprozess zum Einstellen einer vertikalen Referenzoberfläche (210), die einem Punkt entspricht, der um einen vorbestimmten ersten Abstand (X1) in einer Richtung des Elektrodenanordnungsaufnahmeteils (11) von einem ersten Referenzursprungspunkt (O1) bewegt wird, der zwischen dem inneren Startpunkt und dem äußeren Endpunkt angeordnet ist;
einen zweiten Messprozess zum Erfassen eines zweiten Abstands (X2) von der vertikalen Referenzoberfläche (210) zu dem Elektrodenanordnungsaufnahmeteil (11); und
einen Dichtungsspalt-Messprozess zum Erfassen des Dichtungsspalts (14) basierend auf dem ersten Abstand (X1), dem zweiten Abstand (X2) und einem dritten Abstand (X3) von dem inneren Startpunkt zu dem ersten Referenzursprungspunkt (O1),
wobei in dem ersten Messprozess der erste Referenzursprungspunkt (O1) zwischen dem inneren Startpunkt und dem äußeren Endpunkt eingestellt wird und der dritte Abstand (X3) von dem inneren Startpunkt zu dem ersten Referenzursprungspunkt (O1) erfasst wird.

10. Verfahren nach Anspruch 9, wobei der erste Messprozess ferner Folgendes aufweist:
einen ersten Prozess zum Ausstrahlen eines Strahls auf eine Oberfläche des Pouch (10), um den inneren Startpunkt und den äußeren Endpunkt des Dichtungsteils (13) zu messen;
einen zweiten Prozess zum Ausstrahlen eines Strahls auf die andere Oberfläche des Pouch (10), um den inneren Startpunkt und den äußeren Endpunkt des Dichtungsteils (13) zu messen; und
einen dritten Prozess zum Einstellen von Punkten, an denen der innere Startpunkt und der äußere Endpunkt des Dichtungsteils (13) einander überlappen, als den inneren Startpunkt und den äußeren Endpunkt des Dichtungsteils (13), wenn der innere Startpunkt und der äußere Endpunkt des Dichtungsteils (13), die in dem ersten Prozess und dem zweiten Prozess gemessen werden, nicht übereinstimmen.

11. Verfahren nach Anspruch 10, wobei der erste Messprozess ferner einen Prozess zum Erfassen einer Dicke einer Dichtungsbreite (S) basierend auf einem Abstand zwischen einer Dichtungsbreite (S), die in dem ersten Prozess gemessen wird, und einer Dichtungsbreite (S), die in dem zweiten Prozess gemessen wird, aufweist.

12. Verfahren nach Anspruch 9, wobei in dem zweiten Messprozess ein Strahl auf die vertikale Referenzoberfläche (210) ausgestrahlt wird, um einen Punkt, an dem die vertikale Referenzoberfläche (210) angeordnet ist, als einen zweiten Referenzursprungspunkt (O2) einzustellen, und ein Strahl auf das Elektrodenanordnungsaufnahmeteil (11) ausgestrahlt wird, so dass der Strahl durch den zweiten Referenzursprungspunkt (O2) verläuft, um den zweiten Abstand (X2) von dem zweiten Referenzursprungspunkt (O2) zu dem Elektrodenanordnungsaufnahmeteil (11) zu erfassen.

13. Verfahren nach Anspruch 9, wobei in dem Dichtungsspalt-Messprozess (14) ein Wert, der durch Subtrahieren des dritten Abstands (X3) von der Summe des ersten Abstands (X1) und des zweiten Abstands (X2) erhalten wird, als der Dichtungsspalt (14) erfasst wird.

## Revendications

1. Installation de mesure d'un espace d'étanchéité (14) pour une batterie secondaire (1), mesurant un espace d'étanchéité (14) disposé entre un module de réception d'un ensemble d'électrodes (11) et un dispositif d'étanchéité (13) d'une poche (10), l'installation comprenant :
un premier dispositif de mesure (100) configuré pour acquérir un point de départ intérieur et un point d'arrivée extérieur du dispositif d'étanchéité (13),
**caractérisée en ce qu'**elle comprend en outre :
une structure de point d'origine (200) possédant une surface de référence verticale (210) correspondant à un point déplacé d'une première distance prédéterminée (X1) dans une direction du module de réception de l'ensemble d'électrodes (11) depuis un premier point d'origine de référence (O1) disposé entre le point de départ intérieur et le point d'arrivée extérieur ;
un deuxième dispositif de mesure (300) configuré pour acquérir une deuxième distance (X2) de la surface de référence verticale (210) au module de réception de l'ensemble d'électrodes (11) ; et
un contrôleur (400) configuré pour acquérir l'espace d'étanchéité (14) d'après la première distance (X1), la deuxième distance (X2), et une troisième distance (X3) du point de départ intérieur au premier point d'origine de référence (O1),
le contrôleur (400) étant configuré pour établir le premier point d'origine de référence (O1) entre le point de départ intérieur et le point d'arrivée extérieur, et acquérir la troisième distance (X3) du point de départ intérieur au premier point d'origine de référence (O1).

2. Installation selon la revendication 1, le premier dispositif de mesure (100) comprenant :
un premier capteur de déplacement (110) configuré pour émettre un faisceau vers une surface de la poche (10) afin de mesurer le point de départ intérieur et le point d'arrivée extérieur du dispositif d'étanchéité (13) ; et
un deuxième capteur de déplacement (120) configuré pour émettre un faisceau vers l'autre surface de la poche (10) afin de mesurer le point de départ intérieur et le point d'arrivée extérieur du dispositif d'étanchéité (13).

3. Installation selon la revendication 2, dans laquelle, si le point de départ intérieur et le point d'arrivée extérieur du dispositif d'étanchéité (13), mesurés par le premier capteur de déplacement (110) et le deuxième capteur de déplacement (120), ne coïncident pas, le contrôleur (400) est configuré pour établir des points auxquels le point de départ intérieur et le point d'arrivée extérieur, mesurés respectivement par le premier capteur de déplacement (110) et le deuxième capteur de déplacement (120), se chevauchent, en tant que point de départ intérieur et point d'arrivée extérieur du dispositif d'étanchéité (13).

4. Installation selon la revendication 2, une épaisseur d'une largeur de scellement (S) étant acquise en fonction d'une distance entre une largeur de scellement (S) mesurée par le premier capteur de déplacement (110) et une largeur de scellement (S) mesurée par le deuxième capteur de déplacement (120).

5. Installation selon la revendication 4, le deuxième dispositif de mesure (300) étant configuré pour émettre un faisceau vers la surface de référence verticale (210) afin d'établir un point auquel la surface de référence verticale (210) est disposée en tant que deuxième point d'origine de référence (O2), et émettre le faisceau vers le module de réception de l'ensemble d'électrodes (11) de sorte que le faisceau traverse le deuxième point d'origine de référence (O2) afin d'acquérir la deuxième distance (X2) du deuxième point d'origine de référence (O2) au module de réception de l'ensemble d'électrodes (11).

6. Installation selon la revendication 5, le deuxième dispositif de mesure (300) comprenant un troisième capteur de déplacement (310) configuré pour émettre un faisceau vers la surface de référence verticale (210) afin d'établir un point auquel la surface de référence verticale (210) est disposée en tant que deuxième point d'origine de référence (O2).

7. Installation selon la revendication 1, le contrôleur (400) étant configuré pour acquérir une valeur obtenue en soustrayant la troisième distance (X3) de la somme de la première distance (X1) et de la deuxième distance (X2) en tant qu'espace d'étanchéité (14).

8. Installation selon la revendication 4, la structure du point d'origine (200) comprenant en outre une surface de référence horizontale (220) s'étendant depuis la surface de référence verticale (210) dans le sens de la largeur d'étanchéité (S), et comprenant un trou traversant (221) par lequel passe le faisceau émis par le premier capteur de déplacement (110).

9. Procédé de mesure d'un espace d'étanchéité (14) pour une batterie secondaire (1), mesurant un espace d'étanchéité (14) disposé entre un module de réception d'un ensemble d'électrodes (11) et un dispositif d'étanchéité (13) d'une poche (10), le procédé comprenant :
un premier processus de mesure comportant l'acquisition d'un point de départ intérieur et d'un point d'arrivée extérieur du dispositif d'étanchéité (13),
**caractérisé en ce qu'**il comprend :
un processus d'établissement d'un point d'origine comportant l'établissement d'une surface de référence verticale (210) correspondant à un point déplacé d'une première distance prédéterminée (X1) dans une direction du module de réception de l'ensemble d'électrodes (11) depuis un premier point d'origine de référence (O1) disposé entre le point de départ intérieur et le point d'arrivée extérieur ;
un deuxième processus de mesure comportant l'acquisition d'une deuxième distance (X2) de la surface de référence verticale (210) au module de réception de l'ensemble d'électrodes (11) ; et
un processus de mesure de l'espace d'étanchéité (14) comportant l'acquisition de l'espace d'étanchéité (14) d'après la première distance (X1), la deuxième distance (X2), et une troisième distance (X3) du point de départ intérieur au premier point d'origine de référence (O1),
dans lequel, dans le premier processus de mesure, le premier point d'origine de référence (O1) entre le point de départ intérieur et le point d'arrivée extérieur est établi, et la troisième distance (X3) du point de départ intérieur au premier point d'origine de référence (O1) est acquise.

10. Procédé selon la revendication 9, le premier processus de mesure comprenant en outre :
un premier processus d'émission d'un faisceau vers une surface de la poche (10) afin de mesurer le point de départ intérieur et le point d'arrivée extérieur du dispositif d'étanchéité (13) ;
un deuxième processus d'émission d'un faisceau vers l'autre surface de la poche (10) afin de mesurer le point de départ intérieur et le point d'arrivée extérieur du dispositif d'étanchéité (13) ; et
un troisième processus d'établissement de points auxquels le point de départ intérieur et le point d'arrivée extérieur du dispositif d'étanchéité (13) se chevauchent en tant que point de départ intérieur et point d'arrivée extérieur du dispositif d'étanchéité (13) si le point de départ intérieur et le point d'arrivée extérieur du dispositif d'étanchéité (13), mesurés lors du premier processus et du deuxième processus, ne coïncident pas.

11. Procédé selon la revendication 10, le premier procédé de mesure comprenant en outre un processus d'acquisition d'une épaisseur d'une largeur de scellement (S) d'après une distance entre une largeur de scellement (S) mesurée lors du premier processus et une largeur de scellement (S) mesurée lors du deuxième processus.

12. Procédé selon la revendication 9, dans lequel, dans le deuxième processus de mesure, un faisceau est émis vers la surface de référence verticale (210) afin d'établir un point auquel la surface de référence verticale (210) est disposée en tant que deuxième point d'origine de référence (O2) et un faisceau est émis vers le module de réception de l'ensemble d'électrodes (11) de sorte que le faisceau traverse le deuxième point d'origine de référence (O2) afin d'acquérir la deuxième distance (X2) du deuxième point d'origine de référence (O2) au module de réception de l'ensemble d'électrodes (11).

13. Procédé selon la revendication 9, dans lequel, lors du processus de mesure de l'espace d'étanchéité (14), une valeur obtenue en soustrayant la troisième distance (X3) de la somme de la première distance (X1) et de la deuxième distance (X2) est acquise en tant qu'espace d'étanchéité (14).
